# EUROPEAN PATENT APPLICATION

(11) **EP 3 677 493 A1**
(43) Date of publication of application: **08.07.2020**
(21) Application number: 19212388.3
(22) Date of filing: 29.11.2019
(51) Int. Cl.: B62J 17/04, B62K 19/32, B62K 11/04

(54) **MOTORCYCLE WINDSHIELD STRUCTURE**

(30) Priority: 07.01.2019 TW 108100531
(71) Applicant: Kwang Yang Motor Co., Ltd., Kaohsiung City (TW)
(72) Inventor: Tsai, Feng-Chih, Cambridge, CB1 1AH (GB); Kuo, Yuh-Chyi, Cambridge, CB1 1AH (GB)
(74) Representative: Horak, Michael

(57) **Abstract**

The present invention relates to a motorcycle windshield structure. A head tube (111) of a vehicle frame unit (11) of a motorcycle (1) is assembled and mounted with a windshield support assembly (2). The windshield support assembly (2) is provided with a windshield (6). The windshield support assembly (2) includes a vehicle-body fixing seat unit (3) assembled and mounted on the head tube (111), a slide frame unit (4) mounted on the vehicle-body fixing seat unit (3), and a power unit (5) that enables a sliding movement of the slide frame unit (4). The slide frame unit (4) includes a slide rail (41) and a slide frame (42) that is guided by and slides on the slide rail (41). The power unit (5) includes a power motor (51) and a push and guide rod assembly (52) coupled to the slide frame unit (4). The push and guide rod assembly (52) is connected to the slide frame (42) of the slide frame unit (4). The windshield (6) is assembled and mounted on the slide frame (42). The power motor (51) drives the slide frame (42) to move, so that the slide frame (42) is caused to slide upward and downward along the slide rail (41) to make adjustment of a height of the windshield (6).

## Description

### TECHNICAL FIELD OF THE INVENTION

The present invention relates to a motorcycle windshield structure, and more particularly to a motorcycle windshield structure that allows easy adjustment of a height of a motorcycle windshield that is located at a front upper side of a motorcycle.

### DESCRIPTION OF THE PRIOR ART

To prevent a motorcycle rider from being pressed by strong winds during riding of a motorcycle, a windshield is arranged at a front upper side of the motorcycle. The windshield provides an effect of blocking winds so as to protect the rider from being pressed by strong winds and as a result, comfortableness of riding for the rider can be enhanced.

As shown in FIG. 1, Japanese Patent Publication No. 20170124808 provides a disclosure that, although providing an effect of wind shielding during the riding of a rider, has a very complicated structure and is hard to adjust. Thus, it is a challenge for motorcycle windshield manufacturers to provide a motorcycle windshield structure that is simple and allows easy adjustment of a height of a windshield.

### SUMMARY OF THE INVENTION

The primary objective of the present invention is to provide a motorcycle windshield structure, which helps overcome drawbacks of prior art windshields in respect of complicatedness and difficult control of height adjustment.

For such an objective, the primary technical measure of the present invention is to provide a motorcycle windshield structure, wherein a head tube of a vehicle frame unit of a motorcycle is assembled and mounted with a windshield support assembly, and the windshield support assembly is provided with a windshield; the windshield support assembly includes a vehicle-body fixing seat unit assembled and mounted on the head tube, a slide frame unit mounted on the vehicle-body fixing seat unit, and a power unit that enables a sliding movement of the slide frame unit; the slide frame unit includes a slide rail and a slide frame that is guided by and slides on the slide rail, the power unit including a power motor and a push and guide rod assembly coupled to the slide frame unit, the push and guide rod assembly being connected to the slide frame of the slide frame unit, the windshield being assembled and mounted on the slide frame, the power motor driving the slide frame to move, so that the slide frame is caused to slide upward and downward along the slide rail to make adjustment of a height of the windshield.

The efficacy that the present invention may achieve with the primary technical measure is that adjustment of a height of the windshield is made easy.

### BRIEF DESCRIPTION OF THE DRAWINGS

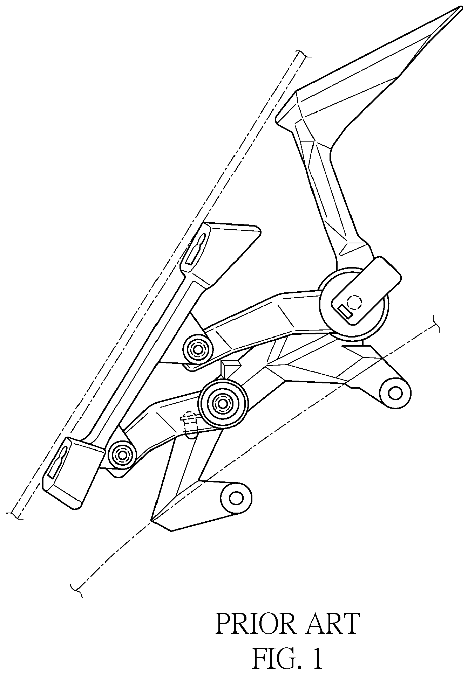

FIG. 1 shows a disclosure of Japanese Patent Publication No. 2017-124808.
FIG. 2 is a schematic view showing an arrangement of a motorcycle windshield according to the present invention.
FIG. 3 is an exploded view showing a windshield support assembly according to the present invention.
FIG. 4 is an assembled view showing the windshield support assembly according to the present invention.
FIG. 5 is a side elevational view showing the windshield support assembly and the windshield according to the present invention.
FIG. 6 is a cross-sectional view showing, in part, a slide rail and a slide frame of a slide frame unit according to the present invention in an assembled condition.
FIG. 7 is a schematic view showing the windshield support assembly and the windshield according to the present invention at a lower position before being raised upward.
FIG. 8 is a cross-sectional view of FIG. 7.
FIG. 9 is a schematic view showing the windshield support assembly and the windshield according to the present invention at a higher position after being raised upward.
FIG. 10 is a cross-sectional view of FIG. 9.

### DETAILED DESCRIPTION OF THE PREFERRED EMBODIMENT

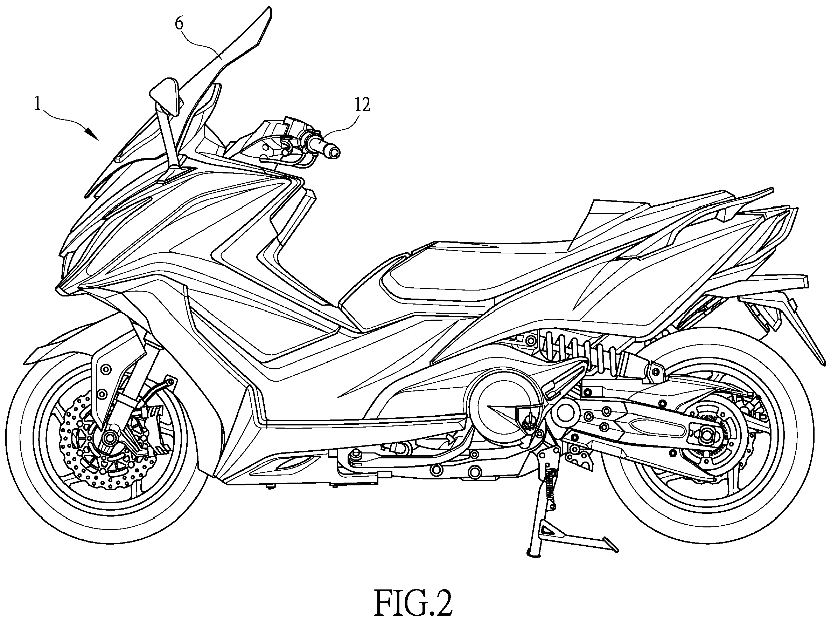

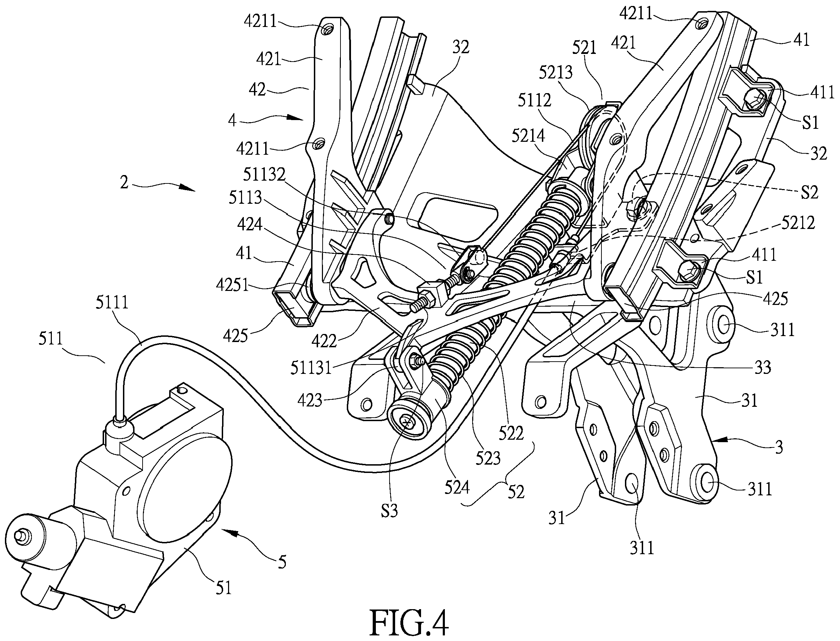

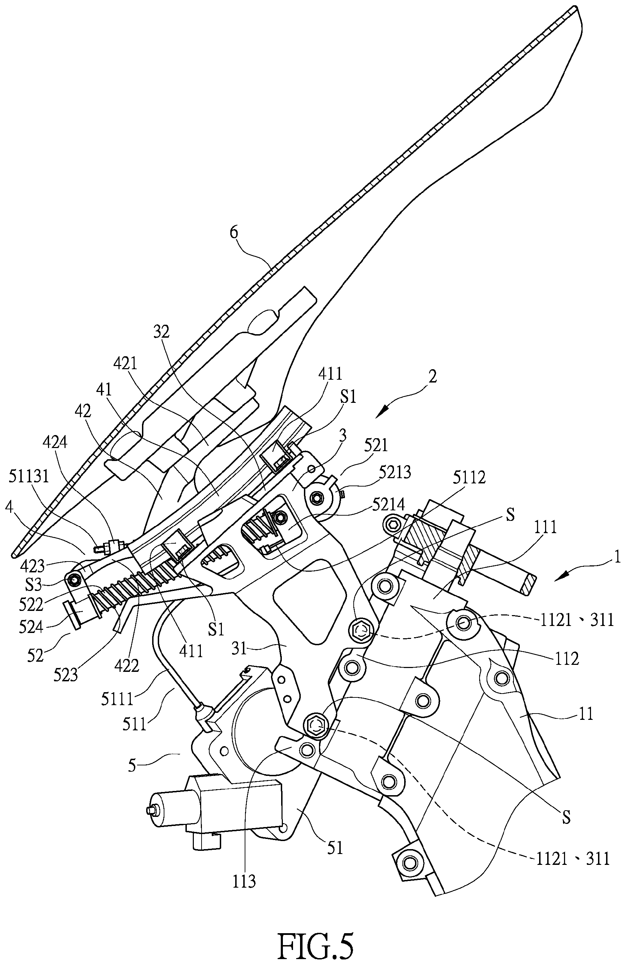

Firstly, referring to illustrations of FIGS. 2, 3, 4, and 5, the present invention provides a motorcycle windshield structure. The motorcycle 1 has a vehicle frame unit 11 that has a head tube 111 on which a windshield support assembly 2 is assembled and mounted. The windshield support assembly 2 receives a windshield 6 to assemble and mount thereon. The windshield support assembly 2 includes a vehicle-body fixing seat unit 3 assembled and mounted on the head tube 111, a slide frame unit 4 assembled and mounted on the vehicle-body fixing seat unit 3, and a power unit 5 that enables a sliding movement of the slide frame unit 4.

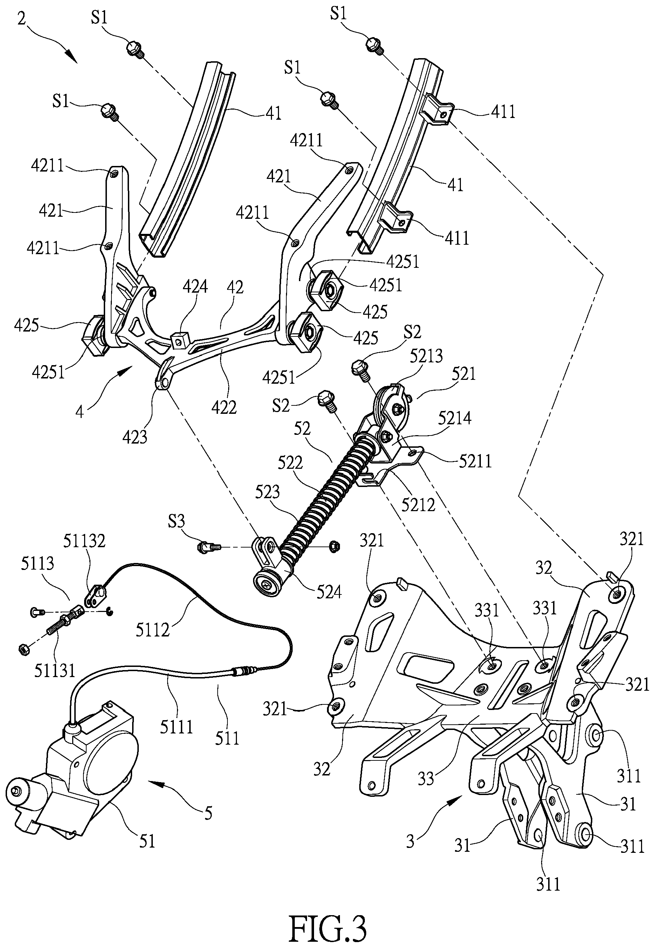

As shown in FIGS. 3, 4, and 5, the head tube 111 of the vehicle frame unit 11 is provided, in a direction toward a vehicle body front side, with a windshield support mounting section 112. The windshield support mounting section 112 enables the vehicle-body fixing seat unit 3 to fix thereto. The windshield support mounting section 112 is formed with a plurality of mounting holes 1121. The vehicle frame unit 11 is provided, at a location adjacent to the head tube 111, with a power unit mounting section 113. The power unit mounting section 113 enables a power motor 51 of the power unit 5 to fix and position thereon.

As shown in FIGS. 3, 4, and 5, the vehicle-body fixing seat unit 3 is provided, at one side thereof, with a vehicle-body fixing section 31. The vehicle-body fixing section 31 is formed with a plurality of fixing holes 311. The fixing holes 311 respectively correspond to the mounting holes 1121 of the windshield support mounting section 112, so that threaded fasteners S may be received through and penetrate the fixing holes 311 and the mounting holes 1121 to have the vehicle-body fixing seat unit 3 mounted to the vehicle frame unit 11 of the vehicle body to provide the vehicle-body fixing seat unit 3 with an effect of being securely positioned on the vehicle frame unit 11. The vehicle-body fixing seat unit 3 is provided, on one side thereof opposite to the vehicle-body fixing section 31, with a slide rail fixing section 32. The slide rail fixing section 32 is formed with a plurality of connection and fixing holes 321. The slide rail fixing section 32 enables connection of a slide rail 41 of the slide frame unit 4 thereto. The vehicle-body fixing seat unit 3 is provided, at a location adjacent to a middle thereof, with a push and guide rod assembly fixing section 33 that enables fixing of a push and guide rod assembly 52 of the power unit 5 thereto. The push and guide rod assembly fixing section 33 includes a plurality of fixing holes 331.

As shown in FIGS. 3, 4, and 5, the slide frame unit 4 includes a slide rail 41 and a slide frame 42 that is guided by the slide rail 41 to slide thereon. The slide rail 41 is made up of generally C-shaped rail segments that are set up in a left-right pairwise arrangement and have an opening in one side thereof. The slide rail 41 is slightly curved and each rail segment of the slide rails 41 is provided, on an outer flange, with fixing lugs 411 that are set up in an upward-downward arrangement. The fixing lugs 411 respectively correspond to the connection and fixing holes 321 of the slide rail fixing section 32 of the vehicle-body fixing seat unit 3, so that threaded fasteners S1 are received through and penetrate the fixing lugs 411 and the connection and fixing holes 321 to have the slide rails 41 securely fixed and positioned on the slide rail fixing section 32 of the vehicle-body fixing seat unit 3.

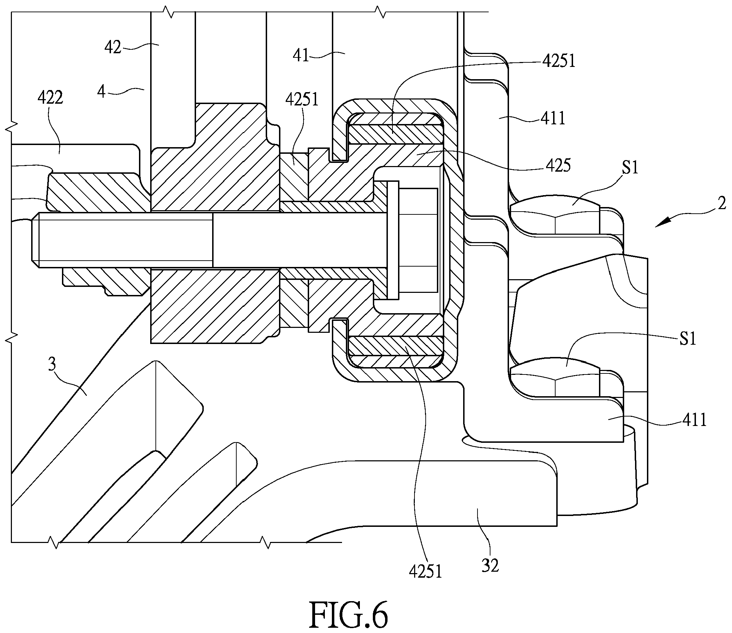

As shown in FIGS. 3, 4, 5, and 6, the slide frame 42 of the slide frame unit 4 is provided, on a rear upper side thereof in a direction toward a rear side of the vehicle body, in an inclined manner, with windshield retaining sections 421 that are set up in a left-right pairwise arrangement. The windshield retaining sections 421 include a plurality of retaining holes 4211, and the retaining holes 4211 of the windshield retaining sections 421 enable the windshield 6 to be retained and positioned thereon. The slide frame 42 is provided, at a front end of the windshield retaining sections 421 that are set up in a left-right pairwise arrangement, with a coupling bridge section 422. The coupling bridge section 422 is provided, at a front end close to a middle thereof, with a coupling section 423 that is extended toward the vehicle body front side. The coupling bridge section 422 is provided, as projecting from a top side thereof at one side opposite to the coupling section 423, with a coupling peg 424. The slide frame 42 is provided, on two outer sides of the coupling bridge section 422, with guide blocks 425 that are set up in an upward-downward arrangement. The guide blocks 425 are provided, in an interior and at one side thereof, with pads 4251. The pads 4251 provide effect of noise reduction or silencing during a sliding movement of the guide blocks 425 and also function to ensure steady sliding. The guide blocks 425 are fit in the slide rail 41, so that when the slide frame 42 is driven by the power unit 5 to slide and move, the guide blocks 425, as being constrained and guided by the slide rail 41, are allowed to smoothly and steadily slide in a predetermined direction.

As shown in FIGS. 2, 3, 4, and 5, the power unit 5 includes a power motor 51 and a push and guide rod assembly 52 coupled to the slide frame unit 4. The power motor 51 is retained on the power unit mounting section 113 of the vehicle frame unit 11. The power motor 51 is electrically connected with a battery of a main power supply (not shown in the drawings) of the motorcycle 1, so as to enable the power motor 51 to receive electrical power as operation power thereof. Further, the power motor 51 is also electrically connected with a control knob (not shown in the drawings) provided on a steering handlebar 12 of the motorcycle 1, so that the control knob is operable for controlling activation of the power motor 51 or not. The power motor 51 includes a control cable 511. The control cable 511 includes an outer tubular line 5111, a control wire 5112 received in and extending through the outer tubular line 5111, and a control wire constrainer assembly 5113 provided on the control wire 5112. The control wire constrainer assembly 5113 includes a retaining bar 51131 and a wire connection seat 51132 pivotally mounted to the retaining bar 51131. The retaining bar 51131 is mounted to the coupling peg 424 of the slide frame 42. The wire connection seat 51132 is generally a lying U-shaped seat. The wire connection seat 51132 is pivotally mounted to the retaining bar 51131, so that the wire connection seat 51132 is free to rotate upward and downward on the retaining bar 51131, and more specifically, the wire connection seat 51132 is rotatable upward and downward to correspond to the sliding movement of the slide frame 42 of the slide frame unit 4. The control cable 511 is connected to the slide frame 42 of the slide frame unit 4, and more specifically, with the power motor 51 being put into operation, the control cable 511 functions to drive the slide frame 42 of the slide frame unit 4 to slide upward and downward, and the slide frame 42 of the slide frame unit 4 also drives the push and guide rod assembly 52 into operation at the same time.

As shown in FIGS. 3, 4, and 5, the push and guide rod assembly 52 includes a fixing seat 521, a push and guide rod 522 pivotally mounted on the fixing seat 521, an elastic element 523 arranged on and encompassing an outer circumference of the push and guide rod 522, and a connection slider 524 arranged at an end of the push and guide rod 522 and distant from the fixing seat 521. The fixing seat 521 is provided with a plurality of mounting holes 5211 facing toward the push and guide rod assembly fixing section 33 of the vehicle-body fixing seat unit 3 and the mounting holes 5211 respectively correspond to the fixing holes 331 of the push and guide rod assembly fixing section 33, so that threaded fasteners S2 are receivable in and penetrating the mounting holes 5211 and the fixing holes 331 of the push and guide rod assembly fixing section 33 to have the fixing seat 521 fixed to and positioned on the push and guide rod assembly fixing section 33 of the vehicle-body fixing seat unit 3. The fixing seat 521 is provided, at a front side thereof, with a constraining groove 5212. The constraining groove 5212 enables a terminal end of the outer tubular line 5111 of the control cable 511 to fit therein and retained thereto. The fixing seat 521 is provided, at a rear side thereof, with a guide roller 5213. The guide roller 5213 enables the control wire 5112 of the control cable 511 to be received therein so as to provide the control wire 5112 with a stable movement, without undesired shifting, during operation thereof. The fixing seat 521 is provided, at a front side of the guide roller 5213, with a pivotal connection seat 5214. The pivotal connection seat 5214 enables pivotal connection of an end (rear end) of the push and guide rod 522 thereto, so that the push and guide rod 522 is free to oscillate upwards and downward about an oscillation center defined by the pivotal connection seat 5214.

As shown in FIGS. 3, 4, and 5, the outer circumference of the push and guide rod 522 is encompassed by the elastic element 523; one end of the push and guide rod 522 is pivotally connected to the pivotal connection seat 5214 of the fixing seat 521; and an opposite end of the push and guide rod 522 that is distant from the pivotal connection seat 5214 of the fixing seat 521 is fit with the connection slider 524, and more specifically, the elastic element 523 is first fit over the outer circumference of the push and guide rod 522, and then, two ends of the elastic element 523 are respectively retained by the connection slider 524 and the push and guide rod 522. The connection slider 524 is fit to one end of the push and guide rod 522 is connected, by means of a threaded fastener S3, to the coupling section 423 of the slide frame 42, and as such, when the slide frame 42 is driven by the control cable 511 of the power motor 51 of the power unit 5 to move along the slide rail 41 to slide upward, the connection slider 524 synchronously slides on the push and guide rod 522 in a direction toward the pivotal connection seat 5214, so that the connection slider 524 pushes the elastic element 523 that is arranged around the outer circumference of the push and guide rod 522 to contract in direction toward the pivotal connection seat 5214 and also causes the push and guide rod 522 to lift upward through oscillating about an oscillation center defined by the pivotal connection seat 5214.

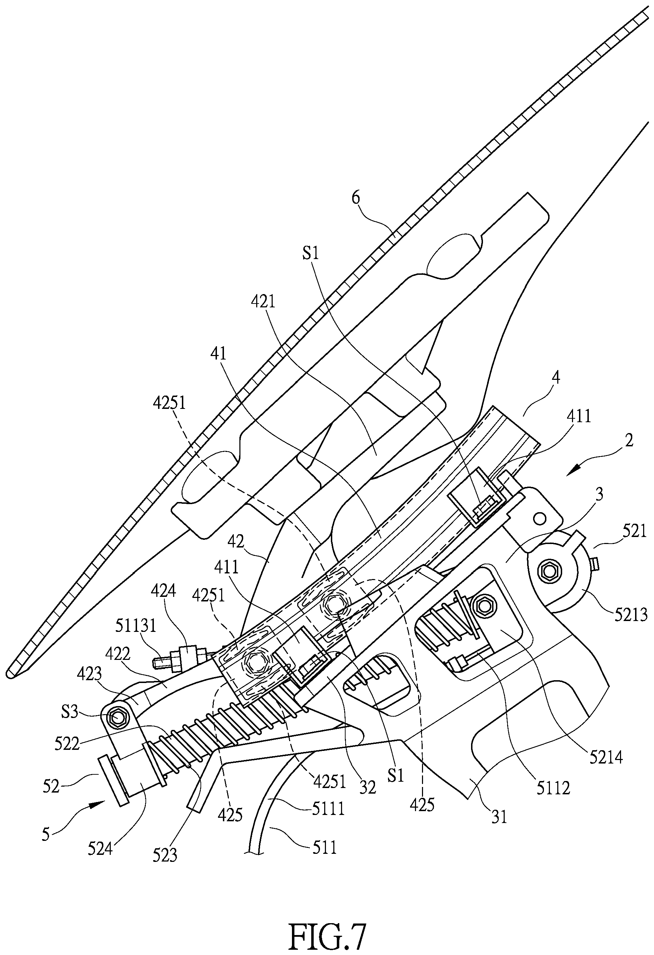

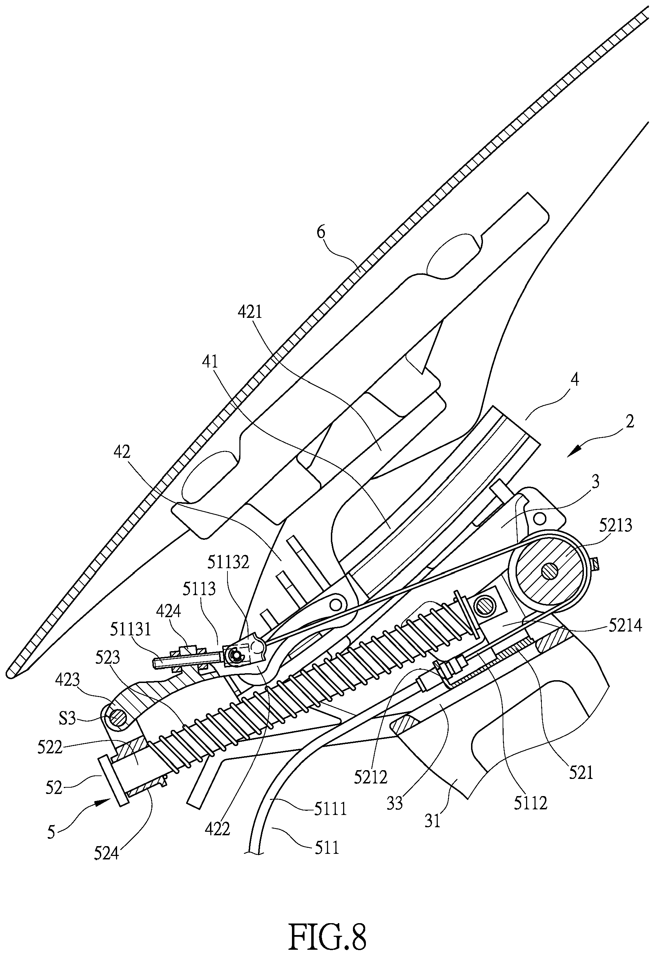

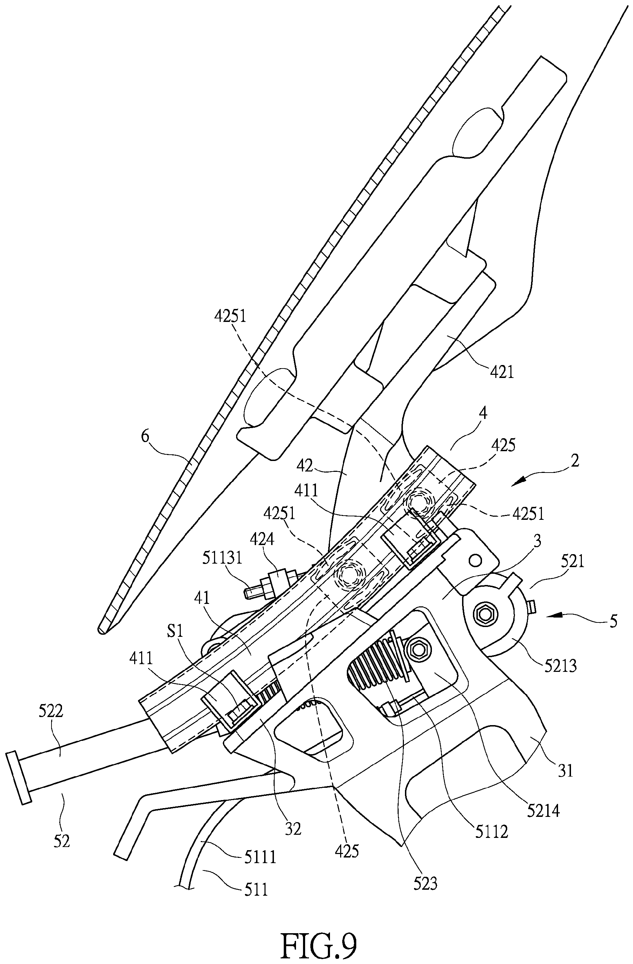

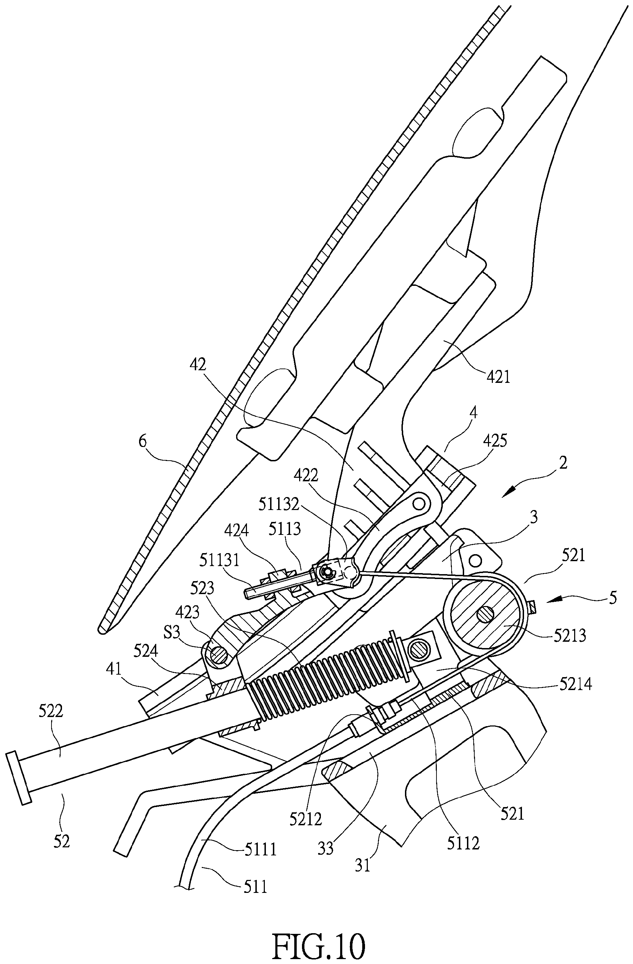

As shown in FIGS. 3, 4, 5, 7, 8, 9, and 10, in embodiment of the present invention, when a rider intends to adjust a height of the windshield 6, such as adjusting up the height of the windshield 6 from a low position, the rider actuates the control knob provided on the steering handlebar 12 to supply power to and activate operation of the power motor 51 of the power unit 5, so that the power motor 51 winds up the control wire 5112 received in the control cable 511 and due to the control wire 5112 being wound up, the connection slider 524 synchronously slides on the push and guide rod 522 in a direction toward the pivotal connection seat 5214 and thus, the connection slider 524 pushes the elastic element 523 that is arranged around the outer circumference of the push and guide rod 522 to contract in a direction toward the pivotal connection seat 5214 and also causes the push and guide rod 522 to lift upward through oscillating about an oscillation center defined by the pivotal connection seat 5214. As such, the slide frame 42 of the slide frame unit 4 is caused, through the guide blocks 425 being constrained and guided by the slide rail 41, to lift upward in an inclined manner along the rail segments of the slide rail 41, until the control wire 5112 inside the control cable 511 is wound up by the power motor 51 to a winding dead point, where the height of the windshield 6 is set forth as a maximum height. When the rider attempts to adjust the height of the windshield 6, such as adjusting down the height of the windshield 6, the rider actuates the control knob provided on the steering handlebar 12 again to cut off power supplied to the power motor 51 of the power unit 5 and to release a braking condition of the power motor 51, and under such a condition, the power motor 51 of the power unit 5 no longer impose constraining positioning on the control wire 5112 inside the control cable 511, and thus, the connection slider 524 no longer compresses the elastic element 523 around the outer circumference of the push and guide rod 522, so that the elastic element 523 that is arranged on the outer circumference of the push and guide rod 522 is acted upon by a spring force provided by itself to elastically drive the pivotal connection seat 5214 back to an initial position, and at the same time, the slide frame 42 of the slide frame unit 4, still through the guide blocks 425 being constrained and guided by the slide rail 41, slides downward, in an inclined manner, along the rail segments of the slide rails 41, back to an initial position, and the push and guide rod 522 oscillates downward, about the oscillation center defined by the pivotal connection seat 5214, back to an initial position. Through the above structural arrangement, the present invention effectively eases height adjustment of the windshield 6.

The primary efficacy of the present invention is that the head tube 111 of the vehicle frame unit 11 of the motorcycle 1 is assembled and mounted with a windshield support assembly 2, and the windshield support assembly 2 is provided with a windshield 6; the windshield support assembly 2 includes a vehicle-body fixing seat unit 3 assembled and mounted on the head tube 111, a slide frame unit 4 mounted on the vehicle-body fixing seat unit 3, and a power unit 5 that enables a sliding movement of the slide frame unit 4; the slide frame unit 4 includes a slide rail 41 and a slide frame 42 that is guided by and slides on the slide rail 41, and the power unit 5 includes a power motor 51 and a push and guide rod assembly 52 coupled to the slide frame unit 4, and the push and guide rod assembly 52 is connected to the slide frame 42 of the slide frame unit 4 and the windshield 6 is assembled and mounted on the slide frame 42, and the power motor 51 drives the slide frame 42 to move, so that the slide frame 42 is caused to slide upward and downward along the slide rail 41 to make adjustment of a height of the windshield 6; as such, adjustment of height of the windshield 6 is made easy.

The second efficacy of the present invention is that the head tube 111 of the vehicle frame unit 11 is provided, in a direction toward the vehicle body front side, with a windshield support mounting section 112, and the windshield support mounting section 112 enables mounting of the vehicle-body fixing seat unit 3 thereto; the vehicle frame unit 11 is provided, at a location adjacent to the head tube 111, with a power unit mounting section 113, and the power unit mounting section 113 enables mounting of the power motor 51 of the power unit 5 thereto; as such, assembling performance of the windshield support assembly 2 is enhanced.

The third efficacy of the present invention is that the vehicle-body fixing seat unit 3 is provided, at one side thereof, with a vehicle-body fixing section 31; the vehicle-body fixing seat unit 3 is provided, at one side thereof opposite to the vehicle-body fixing section 31, with the slide rail fixing section 32, and the slide rail fixing section 32 enables connection of the slide rail 41 of the slide frame unit 4 thereto; the vehicle-body fixing seat unit 3 is provided, at a location adjacent to a middle thereof, with the push and guide rod assembly fixing section 33 for the push and guide rod assembly 52 of the power unit 5 to fix thereto; as such, an effect of easing overall assembling of the windshield support assembly 2 is enhanced.

The fourth efficacy of the present invention is that the slide rail 41 is made up of generally C-shaped rail segments that are set up in a left-right pairwise arrangement and have an opening in one side thereof and the slide rail 41 is slightly curved; as such, an effect of smooth sliding of the slide frame 42 is enhanced.

The fifth efficacy of the present invention is that the slide frame 42 of the slide frame unit 4 is provided, in an inclined manner on a rear upper side thereof in a direction toward a rear side of the vehicle body, with windshield retaining sections 421 that are set up in a left-right pairwise arrangement, and the windshield retaining sections 421 enable mounting of the windshield 6 thereto; the slide frame 42 is provided, at one end of the windshield retaining sections 421 that are set up in a left-right pairwise arrangement, with a coupling bridge section 422, and the coupling bridge section 422 is provided, at a front end close to a middle thereof, with a coupling section 423 that is extended toward the vehicle body front side, and the coupling bridge section 422 is provided, as projecting from a top side thereof at one side opposite to the coupling section 423, with a coupling peg 424, and the slide frame 42 is provided, on two outer sides of the coupling bridge section 422, with at least one guide block 425; as such, an effect of sliding and positioning of the slide frame 42 is ensured.

The sixth efficacy of the present invention is that the guide block 425 is provided, in an interior and at one side thereof, with pads 4251; as such, colliding noise caused by sliding of the slide frame 42 is effectively reduced.

The seventh efficacy of the present invention is that the power motor 51 is mounted on the power unit mounting section 113 of the vehicle frame unit 11; the power motor 51 includes a control cable 511, and the control cable 511 includes an outer tubular line 5111, a control wire 5112 received in and extending through the outer tubular line 5111, and a control wire constrainer assembly 5113 provided on the control wire 5112, and the control wire constrainer assembly 5113 is mounted on the coupling peg 424 of the slide frame 42; the control cable 511 is connected to the slide frame 42 of the slide frame unit 4; as such, an effect of controlling of the power unit 5 is enhanced.

The eighth efficacy of the present invention is that the push and guide rod assembly 52 includes a fixing seat 521, a push and guide rod 522 pivotally mounted on the fixing seat 521, an elastic element 523 arranged on and encompassing an outer circumference of the push and guide rod 522, and a connection slider 524 arranged at an end of the push and guide rod 522 and distant from the fixing seat 521; the fixing seat 521 is provided, at a front side thereof, with a constraining groove 5212, and the constraining groove 5212 enables fitting and retaining of a terminal end of the outer tubular line 5111 of the control cable 511 thereto, and the fixing seat 521 is provided, at a rear side thereof, with a guide roller 5213, and the fixing seat 521 is provided, at a front side of the guide roller 5213, with a pivotal connection seat 5214, and the pivotal connection seat 5214 enables pivotal connection of an end of the push and guide rod 522 thereto; as such, an effect of controlling of the power unit 5 is enhanced.

The ninth efficacy of the present invention is that the outer circumference of the push and guide rod 522 is encompassed by the elastic element 523, and one end the push and guide rod 522 is pivotally connected to the pivotal connection seat 5214 of the fixing seat 521, and an opposite end of the push and guide rod 522 that is distant from the pivotal connection seat 5214 of the fixing seat 521 is fit with the connection slider 524; as such, an effect of controlling of the power unit 5 is enhanced.

The tenth efficacy of the present invention is that the control wire constrainer assembly 5113 includes a retaining bar 51131 and a wire connection seat 51132 pivotally mounted to the retaining bar 51131; as such, the wire connection seat 51132 is free to rotate upward and downward on the retaining bar 51131, and the wire connection seat 51132 is rotatable upward and downward to correspond to a sliding movement of the slide frame 42 of the slide frame unit 4, so as to prevent interference of the control wire 5112 with upward and downward sliding movements of the slide frame 42 of the slide frame unit 4.

## Claims

1. A motorcycle windshield structure, wherein a head tube (111) of a vehicle frame unit (11) of a motorcycle (1) is assembled and mounted with a windshield support assembly (2), and the windshield support assembly (2) is provided with a windshield (6); the windshield support assembly (2) includes a vehicle-body fixing seat unit (3) assembled and mounted on the head tube (111), a slide frame unit (4) mounted on the vehicle-body fixing seat unit (3), and a power unit (5) that enables a sliding movement of the slide frame unit (4); the slide frame unit (4) includes a slide rail (41) and a slide frame (42) that is guided by and slides on the slide rail (41), the power unit (5) including a power motor (51) and a push and guide rod assembly (52) coupled to the slide frame unit (4), the push and guide rod assembly (52) being connected to the slide frame (42) of the slide frame unit (4), the windshield (6) being assembled and mounted on the slide frame (42), the power motor (51) driving the slide frame (42) to move, so that the slide frame (42) is caused to slide upward and downward along the slide rail (41) to make adjustment of a height of the windshield (6).

2. The motorcycle windshield structure according to claim 1, wherein the head tube (111) of the vehicle frame unit (11) is provided, in a direction toward a vehicle body front side, with a windshield support mounting section (112), and the windshield support mounting section (112) enables mounting of the vehicle-body fixing seat unit (3) thereto; the vehicle frame unit (11) is provided, at a location adjacent to the head tube (111), with a power unit mounting section (113), and the power unit mounting section (113) enables mounting of the power motor (51) of the power unit (5) thereto.

3. The motorcycle windshield structure according to claim 1 or 2, wherein the vehicle-body fixing seat unit (3) is provided, at one side thereof, with a vehicle-body fixing section (31); the vehicle-body fixing seat unit (3) is provided, at one side thereof opposite to the vehicle-body fixing section (31), with a slide rail fixing section (32), and the slide rail fixing section (32) enables connection of the slide rail (41) of the slide frame unit (4) thereto; the vehicle-body fixing seat unit (3) is provided, at a location adjacent to a middle thereof, with a push and guide rod assembly fixing section (33) for the push and guide rod assembly (52) of the power unit (5) to fix thereto.

4. The motorcycle windshield structure according to claim 1, wherein the slide rail (41) is made up of generally C-shaped rail segments that are set up in a left-right pairwise arrangement and have an opening in one side thereof and the slide rail (41) is slightly curved.

5. The motorcycle windshield structure according to claim 1, wherein the slide frame (42) of the slide frame unit (4) is provided, in an inclined manner on a rear upper side thereof in a direction toward a rear side of the vehicle body, with windshield retaining sections (421) that are set up in a left-right pairwise arrangement, and the windshield retaining sections (421) enable mounting of the windshield (6) thereto; the slide frame (42) is provided, at one end of the windshield retaining sections (421) that are set up in a left-right pairwise arrangement, with a coupling bridge section (422), and the coupling bridge section (422) is provided, at a front end close to a middle thereof, with a coupling section (423) that is extended toward the vehicle body front side, and the coupling bridge section (422) is provided, as projecting from a top side thereof at one side opposite to the coupling section (423), with a coupling peg (424), and the slide frame (42) is provided, on two outer sides of the coupling bridge section (422), with at least one guide block (425).

6. The motorcycle windshield structure according to claim 5, wherein the guide block (425) is provided, in an interior and at one side thereof, with pads (4251).

7. The motorcycle windshield structure according to claim 1, wherein the power motor (51) is mounted on the power unit mounting section (113) of the vehicle frame unit (11); the power motor (51) includes a control cable (511), and the control cable (511) includes an outer tubular line (5111), a control wire (5112) received in and extending through the outer tubular line (5111), and a control wire constrainer assembly (5113) provided on the control wire (5112), the control wire constrainer assembly (5113) being mounted on the coupling peg (424) of the slide frame (42); the control cable (511) is connected to the slide frame (42) of the slide frame unit (4).

8. The motorcycle windshield structure according to claim 1, wherein the push and guide rod assembly (52) includes a fixing seat (521), a push and guide rod (522) pivotally mounted on the fixing seat (521), an elastic element (523) arranged on and encompassing an outer circumference of the push and guide rod (522), and a connection slider (524) arranged at an end of the push and guide rod (522) and distant from the fixing seat (521); the fixing seat (521) is provided, at a front side thereof, with a constraining groove (5212), the constraining groove (5212) enabling fitting and retaining of a terminal end of the outer tubular line (5111) of the control cable (511) thereto, the fixing seat (521) being provided, at a rear side thereof, with a guide roller (5213), the fixing seat (521) being provided, at a front side of the guide roller (5213), with a pivotal connection seat (5214), the pivotal connection seat (5214) enabling pivotal connection of an end of the push and guide rod (522) thereto.

9. The motorcycle windshield structure according to claim 8, wherein the outer circumference of the push and guide rod (522) is encompassed by the elastic element (523), and one end the push and guide rod (522) is pivotally connected to the pivotal connection seat (5214) of the fixing seat (521), and an opposite end of the push and guide rod (522) that is distant from the pivotal connection seat (5214) of the fixing seat (521) is fit with the connection slider (524).

10. The motorcycle windshield structure according to claim 7, the control wire constrainer assembly (5113) includes a retaining bar (51131) and a wire connection seat (51132) pivotally mounted to the retaining bar (51131).
